# EUROPEAN PATENT SPECIFICATION

(11) **EP 0 882 345 B1**
(45) Date of publication and mention of the grant of the patent: **21.12.2005**
(21) Application number: 97903520.1
(22) Date of filing: 20.02.1997
(51) Int. Cl.: H04L 27/152

(54) **FSK RECEIVER**
FSK-EMPFÄNGER
RECEPTEUR MDF

(30) Priority: 21.02.1996 GB 9603609
(43) Date of publication of application: 09.12.1998
(73) Proprietor: CEDARDELL LIMITED, Newcastle-upon-Tyne NE1 1DE (GB)
(72) Inventor: TODD, Robert, Edmund, Blythe, Northumberland NE24 2PP (GB)
(74) Representative: Vinsome, Rex Martin
(86) International application number: PCT/GB1997/000479
(87) International publication number: WO 1997/031466

(56) References cited:
- EP-A- 0 442 578
- EP-A- 0 527 469
- EP-A- 0 755 113
- GB-A- 2 290 202

## Description

The present invention relates to an apparatus for processing radiated radio frequency (RF) signals, and relates particularly, but not exclusively, to an apparatus for processing radiated digitised frequency modulated (FM) radio frequency signals.

Radio frequency transmission of digital signals is usually achieved by means of frequency - shift keying (FSK), in which a radio frequency (RF) carrier signal is shifted in frequency between two closely spaced frequencies, respectively above and below the carrier frequency, representing the 1's and 0's of digital serial bits transmitted. A received FSK signal is detected by processing the carrier signal by means of an analogue receiver having a local oscillator to produce a signal at an intermediate frequency which is a frequency shifted version of the RF signal at the carrier frequency. The signal at the intermediate frequency is subsequently fed to a limiting amplifier and then to a detector, which provides an output signal having an amplitude representing the digital frequency modulating signal. The output from the receiver is in the form of a series of data bits, and is then processed by means of a digital circuit which either provides output analogue signals representing the original analogue signal of which a digital version is transmitted, or output signals to enable various functions to be carried out, such as automatic telephone dialling by security apparatus, in response to the RF signal being transmitted.

Existing apparatus for processing digitised RF signals suffers from the drawback that interference between the local oscillator of the analogue receiver and a clock generator, which is needed to operate a digital processor, limits the extent to which the analogue receiver and digital processor can operate in proximity to each other because of problems such as noise generation and the like. In order to minimise such interference between the local oscillator and clock generator, these two components need to be shielded from each other by means of cumbersome and bulky shielding arrangements, which increase the cost of apparatus and limit the extent to which the size of the apparatus can be reduced.

In existing apparatus, each track in the circuit will to some extent carry harmonics of the processor clock frequency. Signals on any control lines driven by the processor will also occur on a "clock edge" and therefore any action performed by the processor will generate radiated and directly injected noise.

Existing apparatus therefore has to include components for filtering out such radiated and directly injected noise and also to buffer such noise. Such components also add to the cost of the apparatus and limit the extent to which the size of the apparatus can be reduced.

EP0527469 describes an FSK data receiving system, which is adapted to receive an FSK modulated carrier wave signal. The FSK modulated carrier wave signal is mixed with an output signal of a local oscillator in a frequency mixer. The output of the frequency mixer is fed to a filter to obtain a base band signal, and the base band signal has its amplitude suppressed by an amplitude-limiting amplifier. A pulse count circuit converts the output of the amplitude-limiting amplifier into a voltage, such that the amplitude limiting amplifier and the pulse count circuit act as a frequency-voltage conversion circuit. A first decode circuit is provided for judging whether the FSK modulated frequency deviation of the carrier wave has a positive deviation or a negative deviation. The first decode circuit comprises a phase adjusting circuit and a voltage comparison circuit. A comparison between the output voltage of the pulse count circuit and a second output signal from the phase adjusting circuit is carried out in the voltage comparison circuit in synchronisation with the phase adjustment of the FSK modulated signal by the phase adjusting circuit in order to produce the first decode signal. The first decode signal represents the data encoded in the carrier wave signal.

GB2290202 describes an FSK detector for demodulating an FSK signal received at an input terminal, in order to recover the digital clock and data signal from the FSK signal. The detector comprises a detection circuit that detects the instantaneous phase of the input signal, a differentiating circuit that differentiates the instantaneous phase to obtain the instantaneous frequency, and a base band processing circuit that recovers clock and data signals from the instantaneous frequency. The recovered data and clock signals are output at respective output terminals and for use by further data processing circuits.

US5 130802 describes a television receiving section for receiving an analogue television signal. An analogue television signal received by an antenna is converted to an intermediate frequency by a mixer, and fed to an intermediate frequency filter and then an analogue to digital converter. The intermediate frequency is an integral multiple of the sample clock frequency of the analogue to digital converter, for the purpose of simultaneous demodulation of the television signal.

Preferred embodiments of the present invention seek to overcome the above disadvantages of the prior art.

According to the present invention there is provided an apparatus for processing radiated radio frequency signals, the apparatus comprising:-
an analogue receiver adapted to receive an input signal, representing a radiated radio frequency signal, from an antenna at a radio frequency carrier frequency, and sequentially input said input signal to at least one mixer to provide a data signal representing data transmitted by said radiated radio frequency signal, the receiver including at least one said mixer having a respective local oscillator such that the or each said mixer is adapted to mix a respective first signal with a respective reference signal from the associated local oscillator to provide a respective second signal being a frequency - shifted version of the respective first signal;
characterised by a digital processor for processing said data signal to provide an output signal, the processor including a clock generator, wherein said clock generator and at least one said local oscillator are operated in use by means of a common oscillator.

By actuating a local oscillator of the analogue receiver in response to the provision of clock signals, the clock frequency can be arranged to be an integral fraction of the local oscillator frequency. Both the clock signals and the signals from the local oscillator may be viewed as originating from a single source as they share a common control source. This means that the noise generated by the processor is in harmony with the second local oscillator and therefore the effects of the noise generation are substantially eliminated. This provides the advantage of minimising interference between the local oscillator of the analogue receiver and the clock generator of the processor, which gives rise to the further advantage of improving the extent to which the analogue receiver and processor can be located close to each other in a single device.

The analogue receiver may include a plurality of said mixers.

The clock generator and the local oscillator of the last mixer to which said input signal is sequentially input are preferably operated in use by means of said common oscillator.

The clock generator in use may drive at least one said local oscillator.

The apparatus may further comprise an LC tuned circuit connected to the output of said common oscillator.

The output signal may be an audio signal.

In a preferred embodiment, the apparatus is a security apparatus and said output signal effects one or more tasks in response to receipt of a radiated radio frequency signal.

The radiated radio frequency signals may be frequency modulated signals.

The common oscillator may be a local oscillator of the analogue receiver.

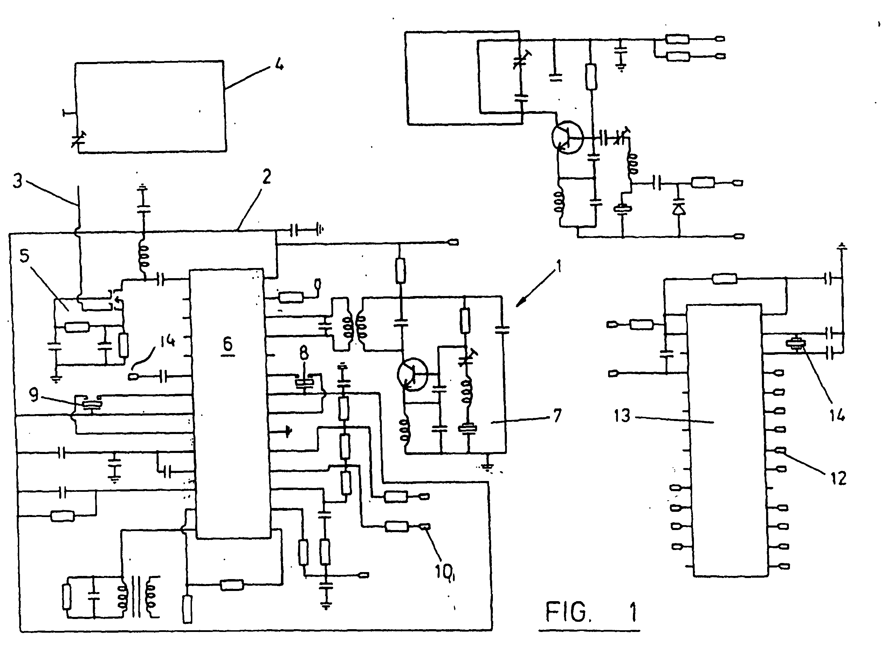

A preferred embodiment of the invention will now be described, by way of example only and not in any limitative sense, with reference to the accompanying drawing, in which :-
Figure 1 shows a device for receiving digitised frequency modulated radio frequency signals embodying the present invention.

Referring to the figure, a signal processing apparatus 1 comprises an analogue RF receiver 2 which receives a digitised frequency modulated input signal at a carrier frequency along lead, 3 from antenna 4. The input signal on lead 3 is amplified by input amplifier 5 and then input to pin I of a receiver integrated circuit 6, for example an MC 3363 integrated circuit manufactured by Motorola. The input amplifier 5 is tuned to 434 MHz.

The integrated circuit 6 includes a first mixer in which the amplified input signal received at pin 1 is mixed with the output signal of a local oscillator 7 tuned to 423.3 MHz to generate a signal at an intermediate frequency of 10.7MHz which is a frequency shifted version of the input signal received at pin 1 of the integrated circuit 6. The intermediate frequency is the difference between the frequency of the amplifier 5 and the frequency of the local oscillator 7.

The output signal of the first mixer is output from pin 23 of integrated circuit 6 and, after filtering by ceramic filter 8, is input to a second mixer through pin 21 of the integrated circuit 6 where it is mixed with the output signal of the crystal controlled oscillator 14. The output of oscillator 14 is input to pin 6 of integrated circuit 6. The second mixer outputs as a result an output signal of frequency 455 KHz from pin 7 of integrated circuit 6. The second local oscillator is used to mix differentially down to 455 KHz for analogue decoding. This is achieved by mixing the signal from the first mixer with that of a 10.245MHz crystal controlled oscillator (i.e the oscillator 14). A processor 13 is arranged to operate at exactly the same frequency (10.245MHz) as the crystal controlled oscillator 14. By injecting this signal into the second local oscillator pin 6 of integrated circuit 6, any desired harmonic, for example, a ninth order harmonic of the incoming crystal control frequency, may be selected.

If the processor 13 is arranged to operate at a harmonic of the frequency of the crystal controlled oscillator 14, then the signal may be used to drive an LC tuned circuit connected to the output of the crystal controlled oscillator 14. This output signal is then filtered by a further ceramic filter 9 and is subsequently input to a limiter amplifier connected to pin 9 of integrated circuit 6, the output of which is then input to a detector circuit connected to pin 14 of integrated circuit 6. The detector circuit provides an output signal having an amplitude representing the frequency shifting of the frequency modulated signal which, after passage through à frequency shift keying (FSK) comparator, provides an output signal at pin 18 of circuit 6 which represents the instantaneous logic level of the digitised frequency modulating signal received on lead 3 from antenna 4.

The signal taken from pin 18 of integrated circuit 6 is output at output terminal 10 of the receiver 2, and the signal provided at output terminal 10 is input to an input terminal 12 of the processor 13, which is a digital processor such as a micro processor. The digital processor 13 is located on the same circuit board as receiver 2 and is operated by means of a clock generator provided by the crystal controlled oscillator 14. The connection between the output of the second oscillator connected to pin 6 and the clock generator 14 is arranged such that the operating frequency of the second oscillator connected to pin 6 of integrated circuit 6 is always a fixed multiple of the clock frequency of the clock generator 14.

The digital processor 13 receives an input signal at input terminal 12 consisting of a series of digitised data bits, and processes the data to provide one or more digital signals. The processor 13 includes a digital to analogue converter (not shown) which outputs an analogue signal representing the signal to be transmitted via antenna 4. In other words, the digital processor 13 output an analogue audio signal, which is an analogue version of the digital frequency modulating signal transmitted via antenna 4.

Alternatively, the digital processor 13 may output a digital automatic dialling signal to generate a remote alarm call in response to receipt of RF signals via antenna 4, automatically generated by security apparatus or the like.

It will be appreciated by persons skilled in the art that the above embodiment has been described by way of example only, and not in any limitative sense, and that various alterations and modifications of the invention are possible without departure from the scope of the invention as defined by the appended claims.

Although the present invention has been described with reference to radiation falling within the radio frequency band, it is to be understood that the principles can be applied to radiation in any chosen band, for example, optical or ultraviolet.

## Claims

1. An apparatus (1) for processing radiated radio frequency signals, the apparatus comprising:-
an analogue receiver (2) adapted to receive an input signal, representing a radiated radio frequency signal, from an antenna (4) at a radio frequency carrier frequency, and sequentially input said input signal to at least one mixer to provide a data signal representing data transmitted by said radiated radio frequency signal, the receiver including at least one said mixer having a respective local oscillator (7) such that the or each said mixer is adapted to mix a respective first signal with a respective reference signal from the associated local oscillator (7) to provide a respective second signal being a frequency - shifted version of the respective first signal;
**characterised by** a digital processor (13) for processing said data signal to provide an output signal, the processor including a clock generator, wherein said clock generator and at least one said local oscillator are operated in use by means of a common oscillator (14).

2. An apparatus according to claim 1, wherein the analogue receiver includes a plurality of said mixers.

3. An apparatus according to claim 2, wherein the clock generator and the local oscillator of the last mixer to which said input signal is sequentially input are operated in use by means of said common oscillator (14).

4. An apparatus according to any one of the preceding claims, wherein the clock generator in use drives at least one said local oscillator.

5. An apparatus according to any one of the preceding claims, further comprising an LC tuned circuit connected to the output of said common oscillator.

6. An apparatus according to any one of the preceding claims, wherein the output signal is an audio signal.

7. An apparatus according to any one of the preceding claims, wherein the apparatus is a security apparatus and said output signal effects one or more tasks in response to receipt of a radiated radio frequency signal.

8. An apparatus according to any one of the preceding claims, wherein the radiated radio frequency signals are frequency modulated signals.

9. An apparatus according to any one of the preceding claims, wherein the common oscillator is a local oscillator (7) of the analogue receiver.

## Patentansprüche

1. Vorrichtung (1) zur Verarbeitung ausgestrahlter Funkfrequenzsignale, wobei die Vorrichtung umfasst:
einen Analogempfänger (2), der eingerichtet ist, ein Eingangssignal zu empfangen, welches ein von einer Antenne (4) bei einer Funkfrequenzträgerfrequenz ausgestrahltes Funkfrequenzsignal darstellt und das Eingangssignal sequentiell mindestens einem Frequenzmischer zugibt, um ein Datensignal bereitzustellen, welches Daten darstellt, die durch das ausgestrahlte Funkfrequenzsignal übermittelt wurden, wobei der Empfänger mindestens einen derartigen Frequenzmischer einschließt, welcher einen jeweiligen lokalen Oszillator (7) aufweist, so dass der oder jeder Frequenzmischer geeignet ist, ein jeweiliges erstes Signal mit einem jeweiligen Referenzsignal vom zugeordneten lokalen Oszillator (7) zu mischen, um ein jeweiliges zweites Signal bereitzustellen, welches eine frequenzverschobene Version des jeweiligen ersten Signals ist;
**gekennzeichnet durch** einen Digitalprozessor (13) zur Verarbeitung des Datensignals, um ein Ausgangssignal bereitzustellen, wobei der Prozessor einen Taktgeber einschließt, wobei der Taktgeber und der mindestens eine lokale Oszillator im Betrieb **durch** einen gemeinsamen Oszillator (14) betrieben werden.

2. Vorrichtung gemäß Anspruch 1, wobei der Analogempfänger eine Vielzahl der Frequenzmischer einschließt.

3. Vorrichtung gemäß Anspruch 2, wobei der Zeitgeber und der lokale Oszillator des letzten Frequenzmischers, zu dem das Eingangssignal sequentiell eingegeben wird, im Betrieb durch den gemeinsamen Oszillator (14) betätigt werden.

4. Vorrichtung gemäß einem der vorhergehenden Ansprüche, wobei der Taktgeber im Betrieb einen der lokalen Oszillatoren antreibt.

5. Vorrichtung gemäß einem der vorhergehenden Ansprüche, wobei die Vorrichtung weiterhin einen LC-eingestellten Schaltkreis umfasst, der mit dem Ausgang des gemeinsamen Oszillators verbunden ist.

6. Vorrichtung gemäß einem der vorhergehenden Ansprüche, wobei das Ausgangssignal ein Audiosignal ist.

7. Vorrichtung gemäß einem der vorhergehenden Ansprüche, wobei die Vorrichtung eine Sicherheitsvorrichtung ist und das Ausgangssignal eine oder mehrere Aufgaben herbeiführt, in Antwort auf den Empfang eines ausgestrahlten Funkfrequenzsignals.

8. Vorrichtung gemäß einem der vorhergehenden Ansprüche, wobei die ausgestrahlten Funkfrequenzsignale frequenzmodulierte Signale sind.

9. Vorrichtung gemäß einem der vorhergehenden Ansprüche, wobei der gemeinsame Oszillator ein lokaler Oszillator (7) des Analogempfängers ist.

## Revendications

1. Dispositif (1) destiné à traiter des signaux radiofréquence rayonnés, Je dispositif comprenant :
un récepteur analogique (2) agencé pour recevoir un signal d'entrée, représentant un signal radiofréquence rayonné, à partir une antenne (4) à une fréquence de porteuse radiofréquence et à recevoir en entrée séquentiellement ledit signal d'entrée sur au moins un mélangeur afin de fournir un signal de données représentant des données transmises par ledit signal radiofréquence rayonné, le récepteur comprenant au moins un dit mélangeur comportant un oscillateur local respectif (7) de telle sorte que ledit mélangeur ou chaque dit mélangeur est agencé pour mélanger un premier signal respectif avec un signal de référence respectif provenant de l'oscillateur local associé (7) pour fournir un second signal respectif qui est une version décalée en fréquence du premier signal respectif,
**caractérisé par** un processeur numérique (13) destiné à traiter ledit signal de données afin de fournir un signal de sortie, le processeur comprenant un générateur d'horloge, dans lequel ledit générateur d'horloge et au moins un dit oscillateur local sont mis en service au moyen d'un oscillateur commun (14).

2. Dispositif selon la revendication 1, dans lequel le récepteur analogique comprend une pluralité desdits mélangeurs.

3. Dispositif selon la revendication 2, dans lequel le générateur d'horloge et l'oscillateur local du dernier mélangeur, sur lequel est reçu séquentiellement en entrée ledit signal d'entrée, sont mis en service au moyen dudit oscillateur commun (14).

4. Dispositif selon l'une quelconque des revendications précédentes, dans lequel le générateur d'horloge en service pilote au moins un dit oscillateur local.

5. Dispositif selon l'une quelconque des revendications précédentes, comprenant en outre un circuit accordé LC relié à la sortie dudit oscillateur commun.

6. Dispositif selon l'une quelconque des revendications précédentes, dans lequel le signal de sortie est un signal audio.

7. Dispositif selon l'une quelconque des revendications précédentes, dans lequel le dispositif est un dispositif de sécurité et ledit signal de sortie effectue une ou plusieurs tâches en réponse à la réception d'un signal radiofréquence rayonné.

8. Dispositif selon l'une quelconque des revendications précédentes, dans lequel les signaux radiofréquence rayonnés sont des signaux modulés en fréquence.

9. Dispositif selon l'une quelconque des revendications précédentes, dans lequel l'oscillateur commun est un oscillateur local (7) du récepteur analogique.
